# FASCICULE DE BREVET EUROPEEN

(11) **EP 0 578 549 B1**
(45) Date de publication et mention de la délivrance du brevet: **10.09.1997**
(21) Numéro de dépôt: 93401721.1
(22) Date de dépôt: 02.07.1993
(51) Int. Cl.: B61C 17/04, B61C 3/00, B61C 5/02, B61H 11/10

(54) **Engin de traction ferroviaire équipé de rhéostats de freinage, pour train à grande vitesse**
Mit Brems-Rheostaten ausgerüstetes Schienentriebfahrzeug für einen Hochgeschwindigkeitszug
Railway traction unit equipped with braking rheostats for a high speed train

(30) Priorité: 06.07.1992 FR 9208310
(43) Date de publication de la demande: 12.01.1994
(73) Titulaire: GEC ALSTHOM TRANSPORT SA, 75016 Paris (FR)
(72) Inventeur: Bertrand, Christian, F-90000 Belfort (FR); Biolchini, Thierry, F-90170 Petitmagny (FR); Chappet, Philippe, F-90200 Cravanche (FR); Puel, Bernard, F-65310 Laloubere (FR); Couderc, Olivier, F-65600 Semeac (FR); Teixido, Joseph, F-64140 Lons (FR)
(74) Mandataire: Fournier, Michel

(56) Documents cités:
- EP-A- 0 233 577
- DE-A- 1 964 940
- DE-C- 424 171
- PATENT ABSTRACTS OF JAPAN vol. 10, no. 231 (M-506)(2287) 12 Août 1986

## Description

La présente invention concerne un engin de traction ferroviaire équipé de rhéostats de freinage, cet engin étant destiné à la traction d'un train à grande vitesse.

Sur les trains à grande vitesse, on associe généralement plusieurs moyens de freinage:
- un frein rhéostatique monté sur les essieux moteurs et un frein à disque monté sur les essieux porteurs, ces freins étant utilisés conjointement pour amener le train de la vitesse maximale jusqu'à l'arrêt,
- un système de freinage avec semelles sur roues, sur les bogies moteurs, ce frein étant utilisé lorsque la vitesse du train a décru suffisamment.

Les rhéostats de freinage du frein rhéostatique sont, de manière classique, intégrés dans l'enceinte de la motrice au même titre que le transformateur, les moteurs et autres organes de puissance.

Le montage des rhéostats de freinage dans la motrice présente de nombreux inconvénients. Ils nécessitent l'utilisation d'un moto-ventilateur de forte puissance, d'un débit d'environ 5 à 10 m³/s, pour leur refroidissement. La masse de ce moto-ventilateur est préjudiciable au projet général de gain de poids d'autant plus que l'on augmente la masse des auxiliaires (système d'alimentation du moto-ventilateur, etc...). Le refroidissement des rhéostats implique des vitesses d'air de ventilation élevées, ce qui engendre un bruit de niveau très élevé et qui s'ajoute au niveau sonore général. L'encombrement du moto-ventilateur s'ajoute à celui déjà important des rhéostats ce qui accentue les problèmes de place dans l'enceinte de la motrice. La géométrie du réseau de ventilation est très complexe et pose des problèmes d'étanchéité, l'aspiration se faisant par les faces latérales et le refoulement se faisant par le haut des faces latérales. En outre, les rhéostats ne se trouvent pas dans l'écoulement principal mais perpendiculairement à celui-ci. Le moto-ventilateur introduit également des vibrations et est gros consommateur de courant. Les prises d'aspiration sur les faces latérales nécessitent des chicanes et des filtres d'air dans le cas où le compartiment machine sert de caisson de répartition d'air pour l'ensemble des organes à ventiler. Ceci complique la fabrication. Le refoulement de l'air de refroidissement en haut des faces latérales implique le montage de persiennes à charnières qui complique également la fabrication.

L'invention permet d'éviter l'emploi d'un moto-ventilateur pour refroidir les rhéostats de freinage grâce à des conduits d'admission de l'air extérieur à la motrice et de refoulement de l'air ayant passé sur ces rhéostats.

Le document DE-C-424 171 porte sur un engin de traction ferroviaire tel que défini dans préambule de la revendication 1.

L'invention a donc pour objet un engin de traction ferroviaire équipé d'au moins un rhéostat de freinage, notamment pour train à grande vitesse, comprenant des moyens de refroidissement du rhéostat de freinage comprenant des conduits d'air permettant d'admettre l'air extérieur à l'engin jusqu'au rhéostat et de refouler, après passage sur le rhéostat, l'air admis à l'extérieur de l'engin, au moins l'entrée du conduit d'admission d'air s'ouvrant vers la direction de déplacement du train, lesdits moyens de refroidissement comprenant des volets obturant l'entrée du conduit d'admission et la sortie du conduit de refroidissement lorsque le rhéostat de freinage n'est pas en service et ouvrant lesdites entrée et sortie lorsque le rhéostat de freinage est en service, caractérisé en ce qu'au moins l'un des volets peut être disposé de façon à servir d'aérofrein lorsque le rhéostat de freinage est en service et de façon à prendre le profil du train lorsque le rhéostat de freinage n'est pas en service.

Un refroidissement convenable des rhéostats est effectivement possible à cause de la grande vitesse de circulation des trains. Les rhéostats étant disposés à l'intérieur de la motrice, l'aérodynamisme de celle-ci est conservée.

Du fait que les moyens de refroidissement comprennent des volets obturant l'entrée du conduit d'admission et la sortie du conduit de refroidissement lorsque le rhéostat de freinage n'est pas en service et ouvrant lesdites entrée et sortie lorsque le rhéostat de freinage est en service, l'air de refroidissement ne pénètre à l'intérieur de la motrice qu'en cas de mise en service du frein rhéostatique.

Du fait qu'au moins l'un des volets est disposé de façon à servir d'aérofrein lorsque le rhéostat de freinage est en service et de façon à prendre le profil du train lorsque le rhéostat de freinage n'est pas en service, le ou les volets contribuent également au freinage du train ce qui constitue un apport non négligeable puisque le freinage à très grande vitesse est actuellement à la limite de ses capacités.

Les volets peuvent être équipés d'une grille de protection pour éviter la pénétration de corps étrangers qui pourraient détériorer les rhéostats.

Les conduits d'air peuvent comporter des déflecteurs pour favoriser le guidage de l'air de refroidissement vers le rhéostat.

L'entrée du conduit d'admission d'air extérieur et la sortie du conduit de refoulement se trouvent de préférence sur la toiture de l'engin de traction.

Le rhéostat peut être disposé immédiatement sous la toiture de l'engin de traction puisque l'air de refroidissement ne suit plus nécessairement un trajet vertical pour être refoulé comme dans l'art connu par la partie haute des faces latérales.

Le rhéostat et les conduits d'admission et de refoulement d'air peuvent être regroupés dans un module rapporté sur l'engin de traction. Ceci procure l'avantage de construire en parallèle la caisse de l'engin de traction et le dispositif de refroidissement du rhéostat et donc de réduire le temps de montage final de l'engin.

La face supérieure du module peut avantageusement constituer une partie de la toiture de l'engin de traction.

L'invention sera mieux comprise et d'autres avantages et particularités apparaîtront à la lecture de la description qui va suivre, donnée à titre non limitatif, et accompagnée des dessins annexés parmi lesquels:
- la figure 1 est une vue de côté de l'avant d'une motrice de train à grande vitesse dans laquelle on a représenté le dispositif de refroidissement des rhéostats de freinage selon l'invention,
- la figure 2 est une vue de dessus de la motrice de la figure 1,
- la figure 3 est une vue de détail du dispositif de refroidissement selon l'invention,
- la figure 4 représente un volet d'admission ou de refoulement d'air utilisé dans le dispositif de refroidissement selon l'invention.

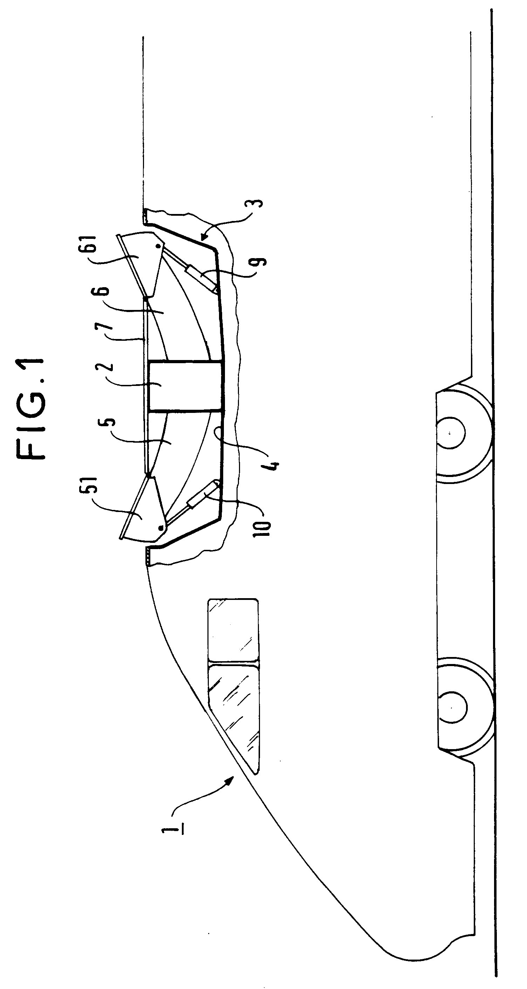

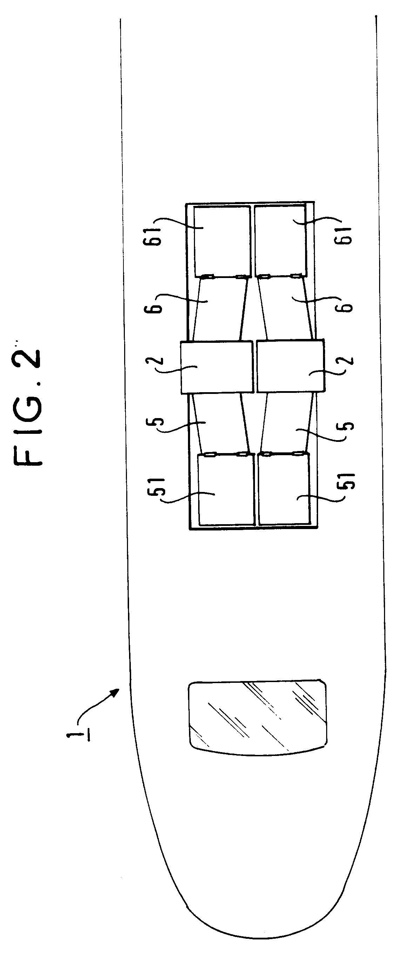

Dans l'exemple de réalisation représenté aux figures 1 et 2, la motrice 1 comporte deux rhéostats de freinage 2 placés dans un caisson ou module 3 rapporté dans la motrice. Le caisson 3 a une forme approximativement parallélépipéde et est soutenu par la structure résistante de la motrice. Il peut être soutenu par des éléments résistants de toiture et aussi par des piliers reposant sur le châssis de la motrice. Les rhéostats 2 sont fixés sur le fond 4 du caisson. Des conduits d'admission d'air 5 débouchent en toiture de la motrice et aboutissent face aux lames des rhéostats. Des conduits de refoulement d'air 6 évacuent l'air réchauffé par les rhéostats vers l'extérieur. Ils débouchent également en toiture de la motrice.

Le caisson 3 possède une face supérieure 7 reconfigurant le profil du toit et qui a été omise sur la figure 2. Il possède également des volets 51, représentés en position ouverte sur la figure 1 et en position fermée sur la figure 2, permettant d'ouvrir et de fermer les conduits d'admission d'air 5. Il possède aussi des volets 61, représentés en position ouverte sur la figure 1 et en position fermée sur la figure 2, permettant d'ouvrir et de fermer les condutis d'avacuation d'air 6.

On remarque sur ces figures que les rhéostats de freinage 2 se trouvent disposés immédiatement sous la toiture de l'engin de traction contrairement à ce qui est fait jusqu'à présent. En effet, les rhéostats selon l'art connu sont placés à une certaine distance de la toiture pour permettre à l'air de refroidissement, qui est dirigé de bas en haut, d'être refoulé en partie haute des faces latérales. Cette nouvelle disposition des rhéostats permet de libérer un certain volume de l'engin.

Les conduits d'admission d'air 5 et de refoulement d'air 6 sont de préférence de section rectangulaire pour les adapter à la section des rhéostats 2. Ceci est un avantage par rapport au ventilateur utilisé selon l'art connu et qui délivre un flux d'air circulaire. Il est utile de prévoir des jeux entre les conduits 5 et 6 et les rhéostats 2 pour résoudre les problèmes de dilatation thermique. En effet, la température des grilles du rhéostat peut atteindre 600°C et la température de l'air refoulé peut atteindre 250°C.

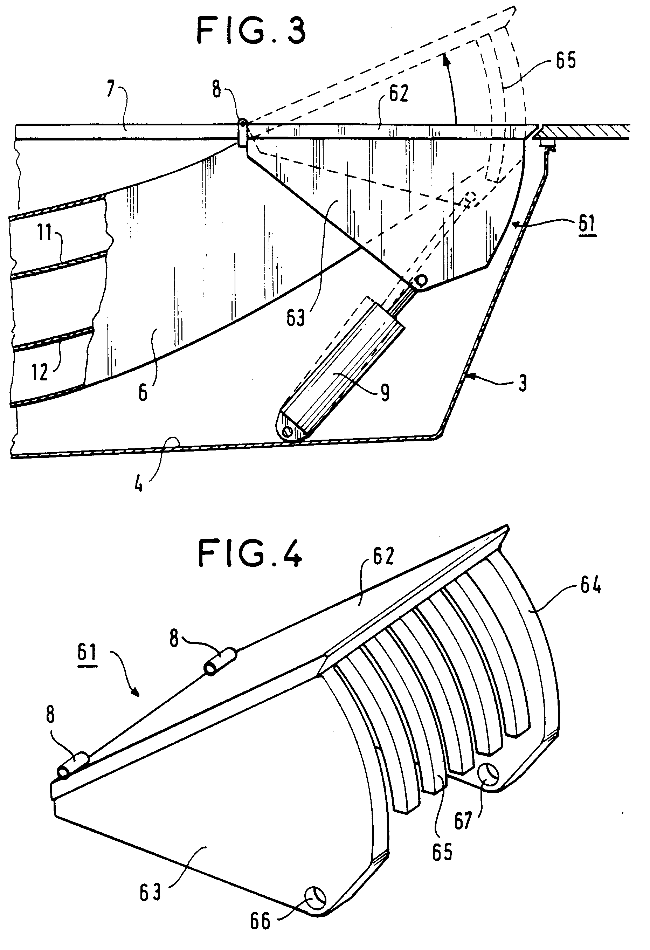

Les conduits 5 et 6 peuvent être constitués à partir de tôles d'acier inoxydable. Ils peuvent comprendre des déflecteurs tels que ceux référencés 11 et 12 sur la figure 3. Le rôle de ces déflecteurs est d'homogénéiser le flux d'air sur les grilles des rhéostats disposées dans le sens de l'écoulement d'air.

Le fond 4 du caisson 3 peut comprendre une trappe d'entretien permettant l'accès aux conduits d'air à partir de l'intérieur de l'engin de traction. Une goulotte d'évacuation d'eau débouchant sur le fond du caisson permet d'évacuer de l'eau résiduelle vers le dessous de l'engin de traction.

Les figures 3 et 4 représentent de manière détaillée un volet du dispositif et son fonctionnement. Le volet 61 est formé d'une trappe 62, de deux joues latérales 63 et 64 et d'une grille de protection 65. Il est par exemple réalisé en matériau composite supportant des températures élevées (comme les résines phénoliques) pour avoir une bonne rigidité et conserver l'isolement électrique par rapport à la caténaire en position d'ouverture.

Le volet 61 est articulé sur la face supérieure 7 du caisson 3 par un système à charnières 8. Il coiffe l'extrémité correspondante du conduit 6.

L'ouverture et la fermeture du volet 61 sont commandées par le vérin 9 fixé au fond 4. Le volet 51 est, de manière analogue, commandé par le vérin 10. Le vérin 9 agit sur un axe non représenté et s'engageant dans les trous 66 et 67 percés dans les joues 63 et 64. Sur la figure 3, le volet 61 a été représenté en traits pleins lorsqu'il est en position fermée et en traits interrompus lorsqu'il est en position ouverte. On constate que les vérins sont toujours en dehors du flux d'air réchauffé par les rhéostats.

Les vérins sont commandés en liaison avec la commande de freinage rhéostatique. Il faut remarquer que, dans l'exemple de réalisation illustré par les figures 1 à 4, le dispositif de refroidissement des rhéostats est symétrique. Ceci est important parce que les trains peuvent rouler dans les deux sens. Selon le cas les conduits d'admission d'air deviennent des conduits de refoulement d'air et inversement.

Comme on peut le constater sur la figure 1, les volets en position ouverte constituent des aérofreins et constribuent au freinage du train.

## Revendications

1. Engin de traction ferroviaire (1) équipé d'au moins un rhéostat de freinage (2), notamment pour train à grande vitesse, comprenant des moyens de refroidissement du rhéostat de freinage comprenant des conduits d'air (5, 6) permettant d'admettre l'air extérieur à l'engin jusqu'au rhéostat et de refouler, après passage sur le rhéostat, l'air admis à l'extérieur de l'engin, au moins l'entrée du conduit d'admission d'air s'ouvrant vers la direction de déplacement du train, lesdits moyens de refroidissement comprenant des volets (51, 61) obturant l'entrée du conduit d'admission et la sortie du conduit de refoulement lorsque le rhéostat de freinage (2) n'est pas en service et ouvrant lesdites entrée et sortie lorsque le rhéostat de freinage (2) est en service, caractérisé en ce qu'au moins l'un des volets (51, 61) est disposé de façon à servir d'aérofrein lorsque le rhéostat de freinage est en service et de façon à prendre le profil de la toiture dudit engin de traction (1) lorsque le rhéostat de freinage n'est pas en service.

2. Engin de traction ferroviaire selon la revendication 1, caractérisé en ce que les volets (5, 6) sont équipés d'une grille de protection (65).

3. Engin de traction ferroviaire selon l'une quelconque des revendications 1 et 2, caractérisé en ce que lesdits conduits d'air (5, 6) comportent des déflecteurs (11, 12) favorisant le guidage de l'air de refroidissement vers le rhéostat (2).

4. Engin de traction ferroviaire selon l'une quelconque des revendications 1 à 3, caractérisé en ce que l'entrée du conduit d'admission et la sortie du conduit de refoulement se trouvent sur la toiture de l'engin de traction.

5. Engin de traction ferroviaire selon l'une quelconque des revendications 1 à 4, caractérisé en ce que le rhéostat (2) est disposé immédiatement sous la toiture de l'engin de traction (1).

6. Engin de traction ferroviaire selon les revendications 4 et 5 prises ensembles, caractérisé en ce que le rhéostat (2) et les conduits d'admission (5) et de refoulement (6) d'air sont regroupés dans un module (3) rapporté sur l'engin de traction (1).

7. Engin de traction ferroviaire selon la revendication 6, caractérisé en ce que la face supérieure (7) dudit module (3) constitue une partie de la toiture de l'engin de traction (1).

## Claims

1. A rail traction unit (1) fitted with at least one braking rheostat (2), the unit being intended in particular for a high speed train, and including cooling means for cooling the braking rheostat, said cooling means including air ducts (5, 6) for admitting air from outside the unit to the rheostat and for exhausting air that has passed through the rheostat back to the outside of the unit, with at least the inlet to the air admission duct opening forwards relative to the train travel direction, said cooling means including flaps (51, 61) closing the inlet to the admission duct and the outlet from the exhaust duct when the braking rheostat (2) is not in operation, and opening said inlet and outlet when the braking rheostat (2) is in operation, said rail traction unit being characterized in that at least one of the flaps (51, 61) is disposed so as to act as an air brake when the braking rheostat is in operation and so as to take up the outline of the roof of the traction unit (1) when the braking rheostat is not in operation.

2. A rail traction unit according to claim 1, characterized in that the flaps (5, 6) are fitted with respective protective grids (65).

3. A rail traction unit according to claim 1 or 2, characterized in that said air ducts (5, 6) include deflectors (11, 12) enhancing guidance of cooling air towards the rheostat (2).

4. A rail traction unit according to any one of claims 1 to 3, characterized in that the inlet to the admission duct and the outlet from the exhaust duct are located in the roof of the traction unit.

5. A rail traction unit according to any one of claims 1 to 4, characterized in that the rheostat (2) is disposed immediately beneath the roof of the traction unit (1).

6. A rail traction unit according to claims 4 and 5 taken together, characterized in that the rheostat (2) and the air admission and exhaust ducts (5, 6) are grouped together in a module (3) that is added to the traction unit (1).

7. A rail traction unit according to claim 6, characterized in that the top face (7) of said module (3) constitutes a portion of the roof of the rail unit (1).

## Patentansprüche

1. Mit mindestens einem Brems-Rheostaten (2) ausgestattetes Eisenbahn-Triebfahrzeug (1), insbesondere für einen Hochgeschwindigkeitszug, das Mittel zur Kühlung des Brems-Rheostaten mit Luftkanälen (5, 6) aufweist, die die Außenluft des Fahrzeugs bis zum Rheostaten gelangen lassen und nach dem Überstreichen der Rheostaten aus dem Fahrzeug abführen, wobei mindestens die Einlässe des Luftkanäle sich in Fahrtrichtung des Zugs öffnen, wobei die Kühlmittel Klappen (51, 61) aufweisen, die den Einlaß des Luftkanals und den Auslaß des Kühlkanals verschließen, wenn der Brems-Rheostat (2) nicht in Betrieb ist, aber Einlaß und Auslaß öffnen, wenn der Brems-Rheostat (2) in Betrieb ist, dadurch gekennzeichnet, daß mindestens eine der Klappen (51, 61) derart angeordnet werden kann, daß sie als Luftbremse dient, wenn der Brems-Rheostat in Betrieb ist, und daß sie sich dem Profil des Triebfahrzeugs (1) anpaßt, wenn der Brems-Rheostat nicht in Betrieb ist.

2. Eisenbahn-Triebfahrzeug nach Anspruch 1, dadurch gekennzeichnet, daß die Klappen (5, 6) mit einem Schutzgitter (65) versehen sind.

3. Eisenbahn-Triebfahrzeug nach einem beliebigen der Ansprüche 1 und 2, dadurch gekennzeichnet, daß die Luftkanäle (5, 6) Ablenkbleche (11, 12) aufweisen, die die Führung der Kühlluft zum Rheostaten (2) begünstigen.

4. Eisenbahn-Triebfahrzeug nach einem beliebigen der Ansprüche 1 bis 3, dadurch gekennzeichnet, daß der Eingang des Kanals zum Einlaß von Außenluft und der Auslaß des Ausstoßkanals sich auf dem Dach des Triebfahrzeugs befinden.

5. Eisenbahn-Triebfahrzeug nach einem beliebigen der Ansprüche 1 bis 4, dadurch gekennzeichnet, daß der Rheostat (2) direkt unter dem Dach des Triebfahrzeugs (1) angeordnet ist.

6. Eisenbahn-Triebfahrzeug nach den Ansprüchen 4 und 5 zusammen, dadurch gekennzeichnet, daß der Rheostat (2) und die Einlaß- (5) und Ausstoßkanäle (6) in einem auf das Triebfahrzeug (1) aufgesetzten Modul (3) zusammengefaßt sind.

7. Eisenbahn-Triebfahrzeug nach Anspruch 6, dadurch gekennzeichnet, daß die Oberseite (7) des Moduls einen Teil des Dachs des Triebfahrzeugs (1) bildet.
